# EUROPÄISCHE PATENTSCHRIFT

(11) **EP 0 630 681 B1**
(45) Veröffentlichungstag und Bekanntmachung des Hinweises auf die Patenterteilung: **11.09.1996**
(21) Anmeldenummer: 94250160.2
(22) Anmeldetag: 20.06.1994
(51) Int. Cl.: B01D 53/86, B01D 53/04

(54) **Verfahren zur Entfernung unerwünschter Beimengungen eines Gases**
Process for the elimination of unwanted impurities from a gas
Procédé pour l'élimination d'impuretés indésirables d'un gaz

(30) Priorität: 24.06.1993 DE 4321622; 07.06.1994 DE 4420224
(43) Veröffentlichungstag der Anmeldung: 28.12.1994
(73) Patentinhaber: MANNESMANN Aktiengesellschaft, D-40213 Düsseldorf (DE)
(72) Erfinder: Becker, Oliver, D-66679 Losheim (DE); Kolz, Sabine, D-66352 Grossrosseln (DE); Hager, Herbert, Dipl.-Ing., D-66809 Nalbach (DE)
(74) Vertreter: Meissner, Peter E., Dipl.-Ing.

(56) Entgegenhaltungen:
- EP-A- 0 492 169
- EP-A- 0 561 484
- EP-A- 0 599 271
- GB-A- 2 051 761
- GB-A- 2 252 968
- US-A- 4 234 549

## Beschreibung

Die Erfindung betrifft ein Verfahren zur Entfernung unerwünschter Beimengungen eines Gases durch heterogene Katalyse gemäß dem Gattungsbegriff des Hauptanspruches.

Die katalytische Verbrennung von trägerfixierten Schadstoffen ist prinzipiell bekannt und läßt sich mit einer großen Vielfalt von Katalysatoren durchführen (DE-A-38 04 722). Der Nachteil der bisher bekannten Katalyseverfahren besteht darin, daß die gesamte Trägerluft auf die Arbeitstemperatur des Katalysatormaterials (200 bis 600 Grad Celsius) erwärmt werden muß. Im Falle von Verbrennungsprozessen, wie z. B. Kraftfahrzeugmotoren hat das zu reinigende Abgas bereits selbst die erforderliche Prozeßtemperatur. Im ersteren Fall, bei dem die erforderliche Energie von außen zugeführt werden muß, bedeutet dies einen hohen Energieaufwand und schränkt den Anwendungsbereich der katalytischen Nachverbrennung ein.

Zur Überwindung dieses Problems ist bereits vorgeschlagen worden (DE-A-3929521), nur die Katoberfläche auf die erforderliche Arbeitstemperatur zu bringen, um mit einer Trägerluft von etwa Raumtemperatur arbeiten zu können. Dazu wird ein mit Katalysatormaterial beschichteter Heizdraht eingesetzt, der durch Anlegen einer elektrischen Spannung direkt beheizt wird. Die trägerfixierte Schadluft wird nun so schnell, beispielsweise durch ein enges Gitter aus Katalysatordrähten, die auf einem aus elektrisch isolierenden Werkstoff hergestellten Rahmen aufgespannt sind, geleitet, daß sich die Luft geringfügig erwärmt und die Schadstoffe weitgehend durch die katalytische Oxidation abgebaut werden. Nachteilig bei diesem Verfahren ist der schlechte Wirkungsgrad der Anlage, da jedes Luftmolekül mit den katalytisch beschichteten Heizdrähten in Kontakt gebracht werden muß. Dies ist aber bei einem für die Leistung der Anlage erforderlichen Durchsatz der schadstoffbeladenen Abluft praktisch nicht möglich. Das geschilderte Verfahren versagt bei Abluft mit geringer Schadstoffkonzentration insbesondere dann, wenn sie unter einen Wert von 100 mg/cbm Abluft absinkt.

Neben der unmittelbaren katalytischen Verbrennung ist auch das Verfahren der vorherigen Adsorption von Schadstoffen aus trägerfixierter Abluft mittels eines Adsorptivs bekannt (DE-A-30 21 174). Bei diesem gattungsbildenden Verfahren wird das zu reinigende Gas durch Druckwirkung geführt bei einer Temperatur von 0 bis 250°C durch ein Bett eines partikelförmigen, aus einem porösen keramischen Träger mit großer spezifischer innerer Oberfläche bestehenden und mit einem bei erhöhter Temperatur als Oxidationskatalysator aktiven Material imprägnierten Adsorbers geleitet. Zunächst werden die gasförmigen Beimengungen angelagert und spätestens nach Beladung des Bettes mit der theoretisch maximal möglichen Beladungskapazität das Bett auf eine Prozeßtemperatur im Bereich von 250 bis 350°C erwärmt und die Prozeßtemperatur über ein festgelegtes Zeitintervall aufrechterhalten und nach Erreichen der Prozeßtemperatur die Beimengungen an der Anlagerungsstelle katalytisch verbrannt. Nach Abschalten der Beheizung und Abkühlung des Bettes auf Betriebstemperatur erfolgt die erneute adsorptive Anlagerung. Die Beheizung des Bettes erfolgt in der Weise, daß in der Zuführleitung zur Reaktionskammer ein Brenner angeordnet ist. Dieser wird gezündet, wenn das Adsorbens regeneriert werden soll. Nachteilig bei dieser Verfahrensweise ist die indirekte Aufheizung des Adsorbers durch das aufgeheizte zu reinigende Gas, da der Wärmeübergang von einem Gas auf einen Festkörper schlecht ist. Dies hat zur Folge, daß der Festkörper nur sehr langsam die erforderliche Prozeßtemperatur erreicht und in dieser Erwärmungsphase die katalytische Verbrennung noch nicht oder nur unvollkommen abläuft. Aus diesem Grunde wird eine Nachreinigung erforderlich, um diese Phase der unvollständigen Verbrennung zu überbrücken. Die Installation einer Nachreinigung erfordert aber einen nicht unerheblichen gerätetechnischen Aufwand und bedeutet Verlust an Energie. Ein weiterer Nachteil des vorgeschlagenen Verfahrens ist darin zu sehen, daS bei der Regeneration im Adsorbens Temperaturen von mehr als 800°C erreicht werden können. Bei diesen hohen Temperaturen besteht die Gefahr, daS das Trägermaterial durch Sintern zusammenbackt oder die katalytische Wirkung zerstört wird.

Aufgabe der Erfindung ist es, ein betriebssicheres Verfahren zur Entfernung unerwünschter Beimengungen eines Gases, insbesondere auch für die Geruchsneutralisation anzugeben, mit dem regenerierbar und ohne Ausbau des Filterelementes auch bei schwankenden Schadstoffkonzentrationen von weniger als 100 mg/cbm die unerwünschten Beimengungen ohne Nachreinigung mit gutem Wirkungsgrad und geringem Energiebedarf entfernt werden können.

Diese Aufgabe wird mit den im kennzeichnenden Teil angegebenen Merkmalen des Anspruches 1 oder 2 gelöst. Vorteilhafte Weiterbildungen sind Bestandteil von Unteransprüchen.

Es ist bereits bekannt, daß es zweckmäßig ist bei gasförmigen Stoffgemischen mit einer geringen Schadstoffkonzentration in der Größenordnung von weniger als 100 mg/cbm Trägergas, die unerwünschten gasförmigen Beimengungen zuerst aufzukonzentrieren, bevor sie anschließend wirkungsvoll mit geringem Energieaufwand entweder katalytisch verbrannt oder vercrackt werden. Diese Verfahrensweise hat den Vorteil, daß insbesondere für belästigende Gerüche, sei es von Ställen der Intensivtierhaltung, der Abluft in Genußmittelfabriken wie Kaffeeröstereien, Schokoladenfabriken sowie Schnellimbißbuden usw., bei der die beeinträchtigende Schadstoffkonzentration unter 10 mg/cbm liegt, eine wirkungsvolle Geruchsneutralisation erreicht werden kann.

Die gewünschte Geruchsneutralisation erfolgt dadurch, daß die unerwünschten Beimengungen in bekannter Weise aufkonzentriert, d. h. adsorptiv angelagert werden und durch Erwärmung desorbiert und anschließend katalytisch verbrannt oder gecrackt werden. Die Anlagerung ist aber in Abhängigkeit von der Konzentration der Beimengungen des zu reinigenden Gases und der durchgesetzten Menge nur für eine bestimmte Zeitspanne möglich, da irgendwann die theoretisch mögliche Beladungskapazität des Filterelementes erreicht ist. Führt man über diesen Punkt hinaus weiterhin dem bereits beladenen Filterelement mit Beimengungen beladenes Gas zu, dann erfolgt keine weitere adsorptive Anlagerung mehr und der gewünschte Reinigungseffekt bzw. die Geruchsneutralisation tritt nicht ein. Spätestens bei Erreichen der Beladungskapazität wird das erfindungsgemäß als Gestrick ausgebildete Filterelement regeneriert. Das Regenerieren erfolgt durch direkte Erwärmung des Filterelementes mittels eines im Filterelement integrierten Heizelementes, das durch Anlegen einer elektrischen Spannung das Filterelement auf die erforderliche Prozeßtemperatur von min. 200° C erwärmt. Während der Erwärmung wird die weitere Zufuhr des zu reinigenden Gases unterbrochen. Statt der Anordnung eines integrierten Heizelementes gibt es auch die Möglichkeit, daß das Filterelement so ausgebildet ist, daß es selbst elektrisch leitend ist.

In Abhängigkeit von der Zusammensetzung der Beimengungen liegt die Temperatur in einem Bereich zwischen 200 bis höchstens 700 Grad Celsius. Für den Fall der Beseitigung durch heterogene Katalyse liegt dieser Temperaturbereich in der Spanne zwischen 200 bis 400 Grad Celsius. Für das alternative Vercracken ist eine Erwärmung des Filterelementes auf ca. 400 - 600 Grad Celsius erforderlich. Das letztgenannte Verfahren ist dann vorteilhaft einsetzbar, wenn die Beimengungen überwiegend aus langkettigen Kohlenwasserstoffverbindungen bestehen. Solche Kohlenwasserstoffverbindungen werden bei den hohen Temperaturen instabil und Teile der Molekülketten brechen ab, so daß der störende Geruchseffekt verschwindet. Das dafür benötigte Filterelement ist besonders einfach aufgebaut, da eine Beschichtung bzw. eine Imprägnierung mit katalytischem Material wie beispielsweise Platin entfallen kann. Der Vorteil gegenüber dem bekannten Stand der Technik ist darin zu sehen, daß die Erwärmung des Filterelementes über Wärmeleitung erfolgt, die wirksamer und schneller ist als über das System Gas-Festkörper. Durch die erfindungsgemäße Unterbrechung der Gaszufuhr erreicht das Filterelement die erforderliche Prozeßtemperatur in kürzester Zeit. Hilfreich dabei ist auch, daß das Filterelement nicht als massiver Festkörper mit großer Masse ausgebildet ist, sondern als ein aus Glasfasern bestehendes Gestrick. Die Form des Gestricks als Träger für das Adsorptions- und katalytische Material sorgt auch dafür, daß das durch das Element geführte Gas stark umgelenkt wird, so daß die adsorptive und katalytische Wirkung besonders intensiv ist. Durch die Erwärmung des Elementes werden die molekularen Bindungskräfte, die das Schadstoffmolekül am Adsorptiv festhalten, überwunden und das Schadstoffmolekül desorbiert. Bei weiterhin gesperrter Zufuhr des Gases verbleibt das Schadstoffmolekül im Filterelement. Wesentlich für das erfindungsgemäße Verfahren ist, daß der für die Regenerierung des Filterelementes notwendige Gasstrom erst eingeschaltet wird, wenn das Filterelement die erforderliche Prozeßtemperatur erreicht hat. Damit die gewünschte katalytische Verbrennung vollständig abläuft, sollte das nach Erreichen der Prozeßtemperatur zugeführte Gas einen Mindestgehalt an Sauerstoff von 12 Vol.% aufweisen. In vielen Fällen wird dies durch das zu reinigende Gas selbst erfüllt; in Sonderfällen kann eine Zumischung von Frischluft erforderlich sein, im Extremfall sogar nur Frischluft allein. Damit das angeströmte Filterelement während der Regenerierphase die Prozeßtemperatur beibehält und andererseits auch nicht überhitzt wird, erfolgt die Gaszufuhr intermittierend. Das Intervall für die Zufuhr wird so gewählt, daß zum einen die Temperatur der Anströmseite des Filterelementes nicht unter die Prozeßtemperatur absinkt und zum anderen die Temperatur der Abströmseite des Elementes einen festgelegten Maximalwert beispielsweise 600 °C nicht überschreitet. Dabei muß berücksichtigt werden, daß der größte Teil der vorkommenden katalytischen Verbrennungen exotherm verläuft und das Filterelement über die Mindesttemperatur hinaus aufgeheizt wird. Durch das vorgeschlagene Verfahren wird sichergestellt, daß zum einen für jeden Bereich des Filterelementes die Mindesttemperatur für eine ordnungsgemäße katalytische Verbrennung eingehalten wird, andererseits auf der heißeren Abströmseite es nicht zu Überhitzungen kommt, die das Filterelement in seiner Wirkungsweise stark beeinträchtigen, schlechtestensfalls sogar zerstören könnte. Das zugeführte sauerstoffhaltige Gas hat zum einen die Aufgabe für ein entsprechendes Sauerstoffangebot im Bereich der ablaufenden katalytischen Verbrennung zu sorgen und zum anderen die Reaktionsprodukte aus dem Filterelement zu schieben. Sobald alle losgelösten Schadstoffmoleküle verbrannt sind, kann die Beheizung des Elementes wieder abgeschaltet werden und das Element abkühlen. Der Grad der Abkühlung hängt davon ab, bei welcher Betriebstemperatur das Filterelement gefahren wird. In den meisten Fällen wird die Betriebstemperatur gleich Raumtemperatur sein, da eine Vielzahl der Anwendungsfälle in diesem Temperaturbereich liegt. Das Adsorptiv kann aber konstruktiv so ausgelegt werden,daß die adsorptive Anlagerung auch bei höheren Temperaturen, d. h. bis etwa max. 200 Grad Celsius möglich ist. Die für die Desorption angelagerten Beimengungen erforderliche Erwärmung ist dann gering, ebenso die Abkühlung. Im Unterschied zum bekannten Stand der Technik ist bei der direkten Beheizung von Vorteil, daß auf der sehr viel schneller abkühlenden Anströmseite des Filterelementes die adsorptive Anlagerung wieder einsetzt, während auf der Abströmseite die katalytische Verbrennung noch weiterläuft.

Den Zeitpunkt des Erreichens der Beladungskapazität des Elementes kann man auf verschiedene Weise ermitteln. Eine Möglichkeit besteht darin, die Konzentration der Beimengungen und die Menge des anfallenden zu reinigenden Gases laufend zu messen und mit der zuvor rechnerisch oder durch Versuche ermittelten Beladungskapazität in Beziehung zu setzen. Unter Berücksichtigung eines festgelegten Sicherheitsabstandes wird aus diesem Verhältnis ein Steuersignal für das Einschalten der Beheizung des Elementes gebildet. Nach Ablauf einer festgelegten Abbrennzeit wird die Beheizung wieder abgeschaltet. Bei Schadstoffanfall mit relativ konstanten Werten hinsichtlich Menge und Konzentration kann der Beladungszeitraum auch rechnerisch ermittelt und die Beheizung zeitgetaktet eingestellt werden.

Für eine wirkungsvolle katalytische Oxidation ist es erforderlich, daß das Element durch die Beheizung auf die auf den Schadstofftyp abgestimmte Prozeßtemperatur erwärmt wird. Um diese genau zu erfassen, wird außerdem vorgeschlagen, die Veränderung des elektrischen Widerstandes des erwärmten Filterelementes für die Steuerung der Beheizung zu nutzen. Das erspart die teilweise schwierige Anbringung eines Temperaturfühlers am Filterelement, ebenso die Herausführung der Kabel vom Fühler zum Meßinstrument bzw. Regler.

Bei der zuvor geschilderten erfindungsgemäßen Art der Regenerierung kann wahrend der Regenerierungsphase keine Beladung des Elementes erfolgen. Für eine Anzahl von Anwendungsfällen ist dies nicht akzeptabel, da es oft keine Möglichkeit der Zwischenspeicherung des anfallenden schadstoffbeladenen Stoffgemisches gibt. Für solche Fälle bietet es sich an, zwei Elemente parallel zu schalten, wovon der eine beladen und der andere regeneriert wird. Der Vorteil dieser Anordnung ist darin zu sehen, daß bei kontinuierlichen Prozessen mit ständigem Anfall schadstoffbeladener Stoffgemische durch Umschalten die ununterbrochene Beladung sichergestellt wird, wobei, die Einzelelemente durch Reihen- oder Parallelschaltung zu größeren Einheiten zusammengefaßt sein können.

Neben der Geruchsneutralisation bei Großküchen, Intensivtierhaltung, der Lebensmittel- und Genußmittelherstellung sowie der pharmazeutischen Industrie können mit dieser Technik die wesentlichen bekannten organischen Substanzen entfernt werden. Bei diesem breiten Anwendungsspektrum muß damit gerechnet werden, daß die zu reinigende Abluft zusätzlich mit festen Partikeln belastet ist. Außerdem können Bestandteile im zu reinigenden Gas enthalten sein, die bei der katalytischen Verbrennung Aschepartikel bilden. Solche Bestandteile müssen zuvor entfernt werden, damit das Element nicht schon nach kurzer Betriebszeit verschmutzt bzw. zuwächst. Für diese Fälle wird deshalb vorgeschlagen, daß dem Element ein entsprechender Abscheider vorgeschaltet wird. Abscheider für feste Partikel und für Bestandteile, die zu Aschepartikeln führen, sind hinlänglich bekannt, so daß sich eine weitergehende Erläuterung dafür erübrigt. Hinsichtlich eines zu hohen Anteiles an Wasserdampf bietet es sich an, dem Filterelement eine an sich bekannte Aerosolabscheidung davorzuschalten. Bei Anfall von fetthaltigen Tröpfchen müssen besondere Maßnahmen der Vorreinigung getroffen werden.

Einsetzbar ist das Verfahren auch für die selektive Adsorption. Im letzteren Fall können durch eine definierte Porengröße des Elementes Einzelstoffe aus einem Stoffgemisch abgeschieden werden. Die generell kleine Porengröße erlaubt es auch, nicht nur die großmolekulartigen Kohlenwasserstoffe, sondern auch kleine Moleküle wie zum Beispiel CO anzulagern. Neben dem bekannten Platin-Palladium als Katalysatormaterial können auch andere Metalle bzw. Metalloxide verwendet werden, so daß das Verfahren auch für die Reduktion anwendbar ist. Für das Einsatzgebiet der Lufttrockung und Gastrocknung ist kein Katalysatormaterial erforderlich, da es hier nur auf die adsorptive Anlagerung ankommt.

Das erfindungsgemäße Verfahren hat den Vorteil, daß das dafür verwendete Filterelement baulich klein gehalten werden kann, da die Anlagerungsstelle für die Schadstoffmoleküle und die Stelle der Verbrennung bei der anschließenden katalytischen Oxidation bzw. die Stelle des Vercrackens ortsgleich sind. Das Verfahren erlaubt auch eine beliebig oft wiederholbare Regenerierung des Filterelementes, so daß ein Ein- und Ausbau des Filterelementes innerhalb der langfristigen Lebensdauer nicht erforderlich ist. Da die Beheizung des Elementes in Abhängigkeit vom Beladungszustand des Elementes gesteuert wird, können Unterbrechungen des Arbeitsprozesses, bei denen kein Gas mit unerwünschten Beimengungen anfällt, im Sinne einer Energieeinsparung genutzt werden. Außerdem wird man das Filterelement so auslegen, daß die Regenerierphase nur einen Bruchteil der Beladungszeit ausmacht.

Anhand eines Ausführungsbeispieles und der Zeichnung wird das erfindungsgemäße Verfahren näher erläutert.

Bewohner in der Nähe von Kläranlagen empfinden die in den Anlagen entstehenden und je nach Windrichtung in die Wohngebiete treibenden Gerüche als unangenehm und belästigend. Im wesentlichen handelt es sich um organische Zersetzungsprodukte, die insbesondere nach Fäkalien und Schwefelwasserstoff riechen. Die Geruchsneutralisation solcher übelriechenden Gase wurde als Anwendung des erfindungsgemäßen Verfahrens gewählt.

Das mit den unerwünschten gasförmigen Beimengen verunreinigte Gas, hier bezeichnet als Rohgas, wird mittels eines Ventilators durch einen Kanal einem Modul zugeführt, das als festes Element ausgebildet und mit einem aktiv katalytisch wirkenden Material versehen ist. Nach Durchströmen des Rohgases durch das Modul ist das austretende Reingas geruchsneutral und die Konzentration der unerwünschten Beimenge ist auf kleiner 1 ppm, gemessen als Gesamtkohlenstoffgehalt, abgesunken. Sobald das Modul seine theoretisch maximale Beladungskapazität erreicht hat, wird es bei Unterbrechung der Gaszufuhr direkt auf beispielsweise 350 Grad erwärmt. Sobald die vorgegebene Temperatur erreicht ist, wird die Gaszufuhr geöffnet, wobei sichergestellt wird, daß dieses Gas einen Mindestgehalt an O₂ von 12 Vol%. aufweist. Anderenfalls muß Frischluft hinzugemischt werden. Die katalytische Verbrennung der zuvor adsorptiv angelagerten und mit zunehmender Erwärmung desorbierten Kohlenwasserstoffe setzt bei etwa 250 Grad Celsius ein. Nach einer bestimmten Zeit ist das Modul regeneriert und alle angelagerten Schadstoffmoleküle aus dem Modul ausgetrieben. Nach Abschalten der Beheizung und Abkühlung auf etwa unter 200 Grad Celsius kann die erneute adsorptive Beladung des Moduls erfolgen. Üblicherweise erfolgt das Regenerieren in drei Stufen. In der ersten Stufe wird die weitere Zufuhr von Rohgas unterbunden und es erfolgt keine weitere Beladung mehr. Gleichzeitig wird die Beheizung eingeschaltet und das Modul auf beispielsweise 350 Grad Celsius erwärmt. Nach Erreichen der vorgegebenen Endtemperatur wird die Gaszufuhr wieder geöffnet und bei intermittierendem Volumenstrom erfolgt die katalytische Verbrennung und das Ausschieben der Reaktionsprodukte. Diese bestehen im wesentlichen aus CO₂ und Wasserdampf. In der dritten und letzten Phase wird die Heizung abgeschaltet und nach Abkühlung des Moduls auf unter 200 Grad Celsius kann die erneute Beladung erfolgen.

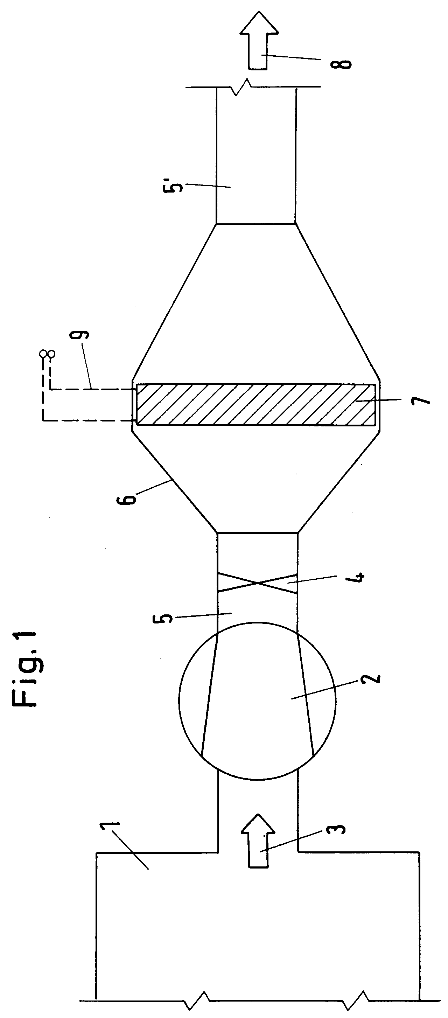

In Figur 1 ist skizzenhaft in einem Längsschnitt eine erfindungsgemäße Anlage dargestellt. Aus einem Behälter oder Raum 1 wird mittels eines Ventilators 2 das mit unerwünschten Beimengungen befrachtete Gas 3, hier als Rohgas bezeichnet, abgezogen. Durch eine dem Ventilator 2 nachgeschaltete Klappe 4, kann der Volumenstrom reguliert werden. Zwischen dem zuführenden Kanal 5 und dem Absaugkanal 5' befindet sich ein einen größeren Durchmesser aufweisendes Gehäuse 6, in dem das Modul 7 angeordnet ist. Dieses Modul 7 ist ein festes Element mit einer großen spezifischen Oberfläche, das mit aktiv katalytisch wirkendem Material, beispielsweise Platin, imprägniert ist. Nach Durchströmen des Moduls 7 wird das Rohgas 3 von den unerwünschten Beimengungen befreit und es kann als Reingas 8 den Abzugskanal 5' verlassen. Das Modul 7 ist direkt beheizbar, hier kenntlich gemacht durch die gestrichelt gezeichneten elektrischen Anschlüsse 9. Die Größe des Moduls 7 ist abhängig von den Auslegedaten der Gesamtanlage und im wesentlichen abhängig vom gewünschten Durchsatz. Beispielsweise weist das Modul 7 einen Durchmesser von 300 mm und eine Höhe von 50 mm bei einem Gesamtgewicht von 4 kg auf. Der Durchsatz für ein solches Modul 7 liegt im Bereich zwischen 80 bis 90 cbm pro Stunde. Beim Durchströmen durch das Modul 7 entsteht ein Druckverlust in der Größenordnung von 500 Pascal. Für die Beheizung des Moduls 7 ist ein elektrischer Anschluß von 1,5 kW vorgesehen. Die Klappe 4 ist von einer Stellung "geschlossen" bis zu einer Stellung "offen" kontinuierlich verstellbar.

Bei den hier beispielhaft angegebenen Daten beträgt die erste Phase für das Erwärmen des Moduls auf etwa 350 Grad ungefähr fünf Minuten. Die katalytische Verbrennung der zuvor adsorptiv angelagerten Schadstoffmoleküle dauert etwa 30 Minuten. Die dritte und letzte Phase nach Abschalten der Heizung liegt in der Größenordnung von ebenfalls fünf Minuten, so daß die Gesamtzeit für die Regenerierung des Moduls 7 bei etwa 40 Minuten liegt. Im Vergleich dazu beträgt die Beladungszeit mehr als 150 Stunden, die aber stark abhängig ist von der Konzentration der unerwünschten Beimengungen im Rohgas. Setzt man die Dauer der Regenerierphase zur Beladungszeit in Beziehung, so ergibt sich ein Wert, der unter einem Prozent liegt. Dies bedeutet, daß im Unterschied zum bekannten Stand der Technik, bei dem fortlaufend katalytisch verbrannt wird, die elektrische Beheizung nur für eine kurze Zeit in Anspruch genommen wird. Der dazu benötigte Energieaufwand ist gegenüber dem des Ventilators vernachlässigbar gering. An diesem Beispiel wird der Vorteil des erfindungsgemäßen Verfahrens deutlich, bei welchem insbesondere für sehr niedrige Schadstoffkonzentrationen über einen sehr langen Zeitraum die adsorptive Beladung erfolgen und in einer nur sehr kurzen Zeit demgegenüber das beladene Modul wieder regeneriert werden kann. Und nur während der Regenerierphase ist eine gegenüber dem Leistungsbedarf des Ventilators zu vernachlässigende elektrische Energie erforderlich.

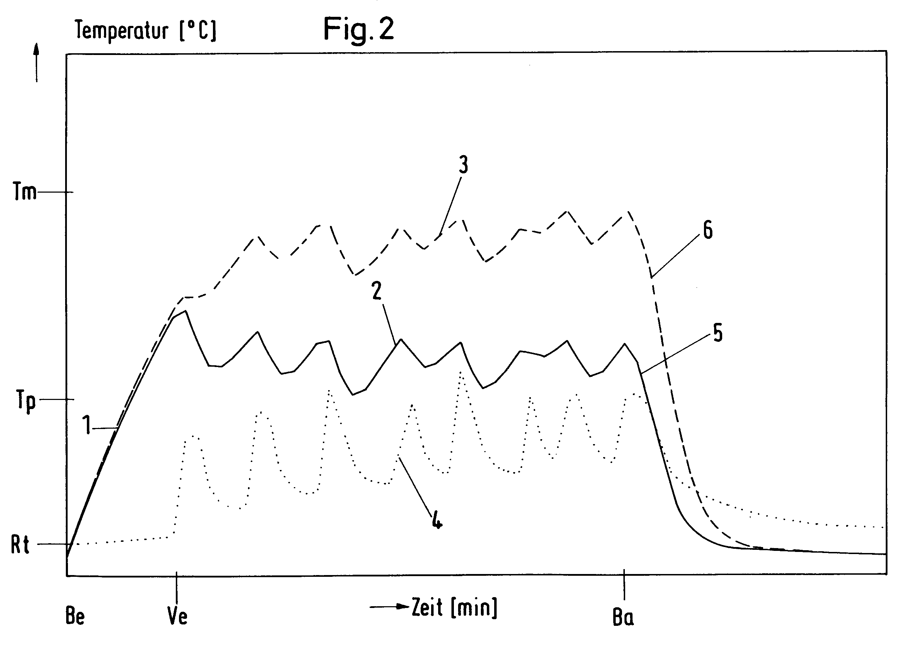

Figur 2 zeigt schematisch die Wirkungsweise der intermittierenden Gaszufuhr während der Regenerierphase. Auf der Ordinate ist die Temperatur in °C und auf der Abzisse die Zeit in Min. abgetragen. Das Filterelement habe gerade die Beladungskapazität erreicht und die Regenerierung soll erfolgen. Dazu wird bei geschlossener Zufuhr des Gases die Beheizung eingeschaltet, hier mit Bₑ gekennzeichnet. Die durchgezogene Linie 1 zeigt deutlich, wie nach dem Einschalten rasch die Temperatur des Filterelementes ansteigt. Sobald das Element die festgelegte Prozeßtemperatur (Tₚ) erreicht hat, beispielsweise 250°C, wird der Ventilator eingeschaltet und das sauerstoffhaltige Gas zugeführt, um die katalytische Verbrennung einzuleiten. Der Einschaltpunkt für den Ventilator ist mit Vₑ gekennzeichnet. Die intermittierende Gaszufuhr kann auch in der Weise erfolgen, daß der Ventilator durchläuft und die im Zuführkanal angeordnete Klappe 4 (Fig. 1) geschlossen und mehr oder weniger geöffnet wird. Ab dem Zeitpunkt der erneuten Gaszufuhr gibt es einen Temperaturunterschied zwischen der Anströmseite 2 und der Abströmseite 3 des Filterelementes. Im Bereich der Erwärmung lagen zuerst alle Bereiche des Filterelementes temperaturmäßig zusammen (siehe Bezugszeichen 1). Die punktierten Zick-Zack-Linien 4 geben schematisch den intermittierenden Verlauf der Gaszufuhr wieder. Man kann deutlich erkennen, wie bei vollem Gasstrom auf der Anströmseite 2 die Temperatur etwas absinkt, aber noch oberhalb der Prozeßtemperatur T_{P} bleibt. Sobald die Gaszufuhr abgeschaltet wird, steigt die Temperatur auf der Anströmseite wieder an, wobei in diesem Beispiel die Tendenz insgesamt leicht fallend ist. Im Unterschied dazu erwärmt sich die Abströmseite 3 des Filterelementes erst einmal unabhängig von der Gaszufuhr weiter und erreicht dann einen Wert, der mit Sicherheitsabstand unterhalb des festgelegten Maximalwertes, hier mit Tₘ bezeichnet, liegt. Damit wird sichergestellt, daß das Filterelement während der Regenerierphase auch an der ungünstigsten Stelle nicht überhitzt wird. Ab Erreichen des Peaks zeigt die Temperaturkurve auf der Abströmseite 3 ebenfalls, wenn auch in abgeschwächter Form, den Effekt der intermittierenden Gaszufuhr 4. Nach einem festgelegten Zeitintervall, das so bemessen ist, daß die Regenerierung vollständig ist, wird die Beheizung wieder abgeschaltet, hier mit Bₐ auf der Abzisse gekennzeichnet. Dem Verlauf der Temperaturkurve auf der Anströmseite 2 ist zu entnehmen, daß infolge der starken Wirkung der Gaszufuhr diese Seite schnell abkühlt 5, so daß in diesem Bereich die erneute adsorptive Anlagerung erfolgen kann. Zeitversetzt erfolgt auch die Abkühlung 6 auf der Abströmseite, wobei sichergestellt ist, daß in diesem Bereich die katalytische Verbrennung noch weiterläuft. Sobald dieser Bereich die Prozeßtemperaturlinie T_{P} merklich unterschritten hat, setzt auch hier die adsorptive Anlagerung wieder ein.

## Patentansprüche

1. Verfahren zur Entfernung unerwünschter Beimengungen eines Gases durch heterogene Katalyse, bei dem das Gas bei einer Temperatur von etwa Raumtemperatur bis weniger als 200°C durch Druck- oder Sogwirkung geführt an einem festen, auf Prozeßtemperatur erwärmbaren, nicht brennbaren als Adsorptiv ausgebildeten Element, das mit fein verteiltem Katalysatormaterial versehen ist, vorbeiströmt und die gasförmigen Beimengungen zunächst adsorptiv angelagert und spätestens nach Beladung des Elementes mit der theoretisch maximal möglichen Beladungskapazität das Element auf die für die Oxidation der Beimengungen erforderliche Prozeßtemperatur erwärmt und die Prozeßtemperatur über ein festgelegtes Zeitintervall aufrechterhalten wird und nach Erreichen der Prozeßtemperatur die Beimengungen an der Anlagerungsstelle katalytisch zu umweltverträglichen gasförmigen Reaktionsprodukten verbrannt werden und nach Abschalten der Beheizung und Abkühlung des Elementes auf Betriebstemperatur die erneute adsorptive Anlagerung erfolgt,
**dadurch gekennzeichnet,**
daß das Gas im als Gestrick ausgebildeten Element stark umgelenkt und nach Erreichen der Maximalbeladung das Element direkt durch Anlegen einer elektrischen Spannung an ein im Element integriertes Heizelement auf eine Prozeßtemperatur von mindestens 200°C bei Unterbrechung der Zufuhr des zu reinigenden Gases erwärmt und nach Erreichen der Prozeßtemperatur intermittierend ein Gas als Sauerstoffträger mit einem Mindestgehalt von 12 Vol.% O₂ zugeführt wird und das Intervall für die Zufuhr so gewählt wird, daß die Temperatur der Anströmseite des Elementes nicht unter die Prozeßtemperatur absinkt und die Temperatur der Abströmseite des Elementes einen festgelegten Maximalwert nicht überschreitet.

2. Verfahren zur Entfernung unerwünschter Beimengungen eines Gases, bei dem das Gas durch Druck- oder Sogwirkung geführt an einem festen und auf Prozeßtemperatur erwärmbaren, nicht brennbaren als Adsorptiv ausgebildeten Element vorbeiströmt und die gasförmigen Beimengungen zunächst adsorptiv angelagert und spätestens nach Beladung des Elementes mit der theoretisch maximal möglichen Beladungskapazität das Element auf die für ein Cracken der Beimengungen erforderliche Prozeßtemperatur erwärmt und die Prozeßtemperatur über ein festgelegtes Zeitintervall aufrechterhalten wird und nach Erreichen der Prozeßtemperatur die Beimengungen an der Anlagerungsstelle vercracken und nach Abschalten der Beheizung und Abkühlung des Elementes auf Betriebstemperatur die erneute adsorptive Anlagerung erfolgt,
**dadurch gekennzeichnet,**
daß das Gas im als Gestrick ausgebildeten Element stark umgelenkt und nach Erreichen der Maximalbeladung das Element direkt durch Anlegen einer elektrischen Spannung an ein im Element integriertes Heizelement auf eine Prozeßtemperatur von mindestens 400°C bei Unterbrechung der Zufuhr des zu reinigenden Gases erwärmt und nach Erreichen der Prozeßtemperatur intermittierend das zu reinigende Gas zugeführt wird und das Intervall für die Zufuhr so gewählt wird, daß die Temperatur der Anströmseite des Elementes nicht unter die Prozeßtemperatur absinkt und die Temperatur der Abströmseite des Elementes einen festgelegten Maximalwert nicht überschreitet.

3. Verfahren nach Anspruch 1 oder 2,
**dadurch gekennzeichnet,**
daß die Konzentration der Beimengungen und die anfallende Menge des zu reinigenden Gases laufend gemessen und zur Beladungskapazität des Elementes in Beziehung gesetzt und aus diesem Verhältnis unter Berücksichtigung eines festgelgten Sicherheitsabstandes ein Steuersignal für das Einschalten der Beheizung gebildet wird.

4. Verfahren nach einem der vorhergehenden Ansprüche 1 bis 3,
**dadurch gekennzeichnet,**
daß die Änderung des elektrischen Widerstandes des beheizbaren Elementes als Meßsignal für die Steuerung der Beheizung verwendet wird.

5. Verfahren nach einem der vorhergehenden Ansprüche 1 bis 4,
**dadurch gekennzeichnet,**
daß die Maximaltemperatur auf der Abströmseite des Elementes unter 600°C liegt.

6. Verfahren nacheinem der vorhergehenden Ansprüche 1 bis 4,
**dadurch gekennzeichnet,**
daß vor Eintritt des zu reinigenden Gases in das Element die im Gas möglicherweise enthaltenen festen Partikel sowie die Flüssigkeits- und Fetttröpfchen abgeschieden werden.

## Claims

1. A method of removing undesirable impurities from a gas by heterogeneous catalysis, in which the gas is brought, at a temperature ranging from approximately room temperature to less than 200°C, by pressure or suction action to flow past a non-combustible solid element constructed as an adsorbent heatable to the process temperature and provided with finely distributed catalyst material, the gaseous impurities firstly being adsorptively attached and the element, at the latest after loading of the element with the theoretically maximum possible loading capacity, being heated to the process temperature necessary for oxidation of the impurities, the process temperature being maintained over a fixed time period and, when the process temperature has been reached, the impurities being catalytically burned at the attachment point to form environmentally compatible gaseous reaction products, renewed adsorptive attachment occurring after the heating has been switched off and cooling of the element to the operating temperature, characterised in that the gas is strongly deflected in the element constructed as a knitted fabric and the element, after maximum loading has been achieved, is heated directly by application of an electrical voltage to a heating element integral with the element to a process temperature of at least 200°C upon interruption of the supply of the gas to be cleaned and, after the process temperature has been reached, a gas is intermittently supplied as an oxygen carrier with a minimum content of 12 % by volume O₂ and the interval for the supply is such that the temperature on the feed side of the element does not drop below the process temperature and the temperature on the outlet side of the element does not exceed a fixed maximum value.

2. A method of removing undesirable impurities from a gas, in which the gas is brought by pressure or suction action to flow past a non-combustible solid element constructed as an adsorbent heatable to the process temperature, the gaseous impurities firstly being adsorptively attached and the element, at the latest after loading of the element with the theoretically maximum possible loading capacity, being heated to the process temperature necessary for cracking of the impurities, the process temperature being maintained over a fixed time period and, when the process temperature has been reached, the impurities being cracked at the attachment point, renewed adsorptive attachment occurring after the heating has been switched off and cooling of the element to the operating temperature, characterised in that the gas is strongly deflected in the element constructed as a knitted fabric and the element, after maximum loading has been achieved, is heated directly by application of an electrical voltage to a heating element integral with the element to a process temperature of at least 400°C upon interruption of the supply of the gas to be cleaned and, after the process temperature has been reached, the gas to be cleaned is intermittently supplied and the interval for the supply is such that the temperature on the feed side of the element does not drop below the process temperature and the temperature on the outlet side of the element does not exceed a fixed maximum value.

3. A method according to claim 1 or claim 2, characterised in that the concentration of the impurities and the amount of gas arising to be cleaned are measured continuously and set in relation to the loading capacity of the element and a control signal for switching on the heating is formed from this relationship taking into account a fixed safety margin.

4. A method according to any one of preceding claims 1 to 3, characterised in that alteration of the electrical resistance of the heatable element is used as a measuring signal for control of the heating.

5. A method according to any one of preceding claims 1 to 4, characterised in that the maximum temperature on the outlet side of the element lies below 600°C.

6. A method according to any one of preceding claims 1 to 4, characterised in that, before the gas to be cleaned enters the element, the solid particles which may be contained in the gas as well as the liquid and fat droplets are separated off.

## Revendications

1. Procédé pour éliminer des impuretés indésirables d'un gaz par catalyse hétérogène, dans lequel le gaz, pour une température d'à peu près la température ambiante jusqu'à moins de 200°C, qui est commandée par une action de pression ou de succion, passe devant un élément solide, pouvant être chauffé à la température de processus, non combustible, réalisé sous forme d'un corps adsorbé et muni d'un matériau catalysateur finement réparti, et les impuretés gazeuses sont tout d'abord accumulées par adsorption, et ensuite, après le chargement de l'élément avec la capacité de chargement théorique maximale possible, l'élément est chauffé à la température de processus nécessaire pour l'oxydation des impuretés, et la température de processus est maintenue durant un intervalle de temps fixé, et après l'obtention de la température de processus, les impuretés sont brûlées à la zone d'accumulation de façon catalytique dans des produits réactionnels gazeux compatibles avec l'environnement, et après l'arrêt du chauffage et le refroidissement de l'élément à la température de fonctionnement, la nouvelle accumulation par adsorption est effectuée,
caractérisé en ce que le gaz est fortement dif fusé dans l'élément réalisé sous forme de tricot, et après l'obtention de la charge maximale, l'élément est chauffé, directement par la génération d'une tension électrique sur un élément de chauffage intégré dans l'élément, à une température de processus d'au moins 200°C, avec une interruption de l'amenée du gaz à nettoyer, et après l'obtention de la température de processus, un gaz est amené de façon intermittente sous forme de comburant avec une teneur minimale de 12 % en volume de O₂, et l'intervalle pour l'amenée est choisi de sorte que la température de la face en amont de l'élément ne descend pas au-dessous de la température de processus et la température de la face en aval de l'élément ne dépasse pas une valeur maximale fixée.

2. Procédé pour éliminer des impuretés indésirables d'un gaz, dans lequel le gaz commandé par une action de pression ou de succion passe devant un élément solide, pouvant être chauffé à la température de processus, non combustible et réalisé sous forme d'un corps adsorbé, et les impuretés gazeuses sont tout d'abord stockées par adsorption, et ensuite après le chargement de l'élément avec la capacité de chargement théorique maximale possible, l'élément est chauffé à la température de processus nécessaire pour un craquage des impuretés, et la température de processus est maintenue durant un intervalle de temps fixé, et après l'obtention de la température de processus, les impuretés sont craquées à la zone d'accumulation, et après l'arrêt du chauffage et le refroidissement de l'élément à la température de fonctionnement, la nouvelle accumulation par adsorption est réalisée,
caractérisé en ce que le gaz est fortement diffusé dans l'élément réalisé sous forme de tricot, et après l'obtention de la charge maximale, l'élément est chauffé, directement par la génération d'une tension électrique sur un élément de chauffage intégré dans l'élément, à une température de processus d'au moins 400°C, avec une interruption de l'amenée du gaz à nettoyer, et après l'obtention de la température de processus, le gaz à nettoyer est amené de façon intermittente, et l'intervalle pour l'amenée est choisi de sorte que la température de la face en amont de l'élément ne descend pas au-dessous de la température de processus, et la température de la face en aval de l'élément ne dépasse pas une valeur maximale fixée.

3. Procédé selon l'une des revendications 1 ou 2,
caractérisé en ce que la concentration des impuretés et les quantités du gaz à nettoyer produites sont mesurées en continu et sont prises en compte pour la capacité de chargement de l'élément, et à partir de ce rapport, en tenant compte d'une distance de sécurité fixée, un signal de commande pour la mise en service du chauffage est formé.

4. Procédé selon l'une des revendications précédentes 1 à 3, caractérisé en ce que la modification de la résistance électrique de l'élément pouvant être chauffé est utilisée comme signal de mesure pour la commande du chauffage.

5. Procédé selon l'une des revendications précédentes 1 à 4, caractérisé en ce que la température maximale sur la face en aval de l'élément, est située au-dessous de 600°C.

6. Procédé selon l'une des revendications précédentes 1 à 4, caractérisé en ce que, avant l'entrée du gaz à nettoyer dans l'élément, les particules solides contenues dans le gaz, ainsi que les gouttelettes de liquide et de graisse, sont extraites.
